# EUROPEAN PATENT APPLICATION

(11) **EP 1 553 748 A2**
(43) Date of publication of application: **13.07.2005**
(21) Application number: 05000240.1
(22) Date of filing: 07.01.2005
(51) Int. Cl.: H04M 1/02

(54) **Portable wireless terminal with an additional rotatable display device**

(30) Priority: 09.01.2004 KR 2004001384
(71) Applicant: Samsung Electronics Co., Ltd., Suwon-si, Gyeonggi-do (KR)
(72) Inventor: Lee, Kun-Hak, Yeongtong-gu Suwon-si Gyeonggi-do (KR)
(74) Representative: Lang, Johannes, Dipl.-Ing.

(57) **Abstract**

A portable wireless terminal (300) constructed with a first housing (301), a second housing (302) which has a display device (321) positioned on its surface that faces the first housing and is rotatably coupled to the first housing, and a third housing (320) which has an auxiliary display device (329) positioned on a surface thereof and is rotatably coupled to an end of the second housing in such a manner that the front and rear surfaces thereof can be reversed. The portable wireless terminal (300), which has a rotatable display device as above, can display images toward a user even when the second housing is opened. The terminal can be used for video communication in a convenient way, because all of the display devices provided on the terminal can be utilized during video communication, by positioning them in such a manner that they face the first housing. Furthermore, as the function of the terminal is more variously extended in the future, any limit on the display devices provided on the terminal can be avoided.

## Description

### CLAIM OF PRIORITY

This application makes reference to, incorporates the same herein, and claims all benefits accruing under 35 U.S.C. §119 from an application for *PORTABLE WIRELESS TERMINAL HAVING ROTATABLE DISPLAY DEVICE* earlier filed in the Korean Intellectual Property Office on 9 January 2004 and there duly assigned Serial No. 2004-1384.

### BACKGROUND OF THE INVENTION

### Field of the Invention

The present invention relates to a portable wireless terminal and, more particularly, to portable wireless terminals bearing display devices, such as an LCD, that are capable of reversing the orientation of front and rear surfaces of the display devices.

### Description of the Related Art

Portable wireless terminals from the information communication industry, equipped various functions and appearances have began to appear in the market. According to their appearance, portable wireless terminals may be classified into bar-type terminals, flip-type terminals which have a flip cover coupled to a bar-type terminal, and folding-type terminals which have a pair of housings coupled to each other in such a manner that they may be rotated by a predetermined angle relative to each other when opened and closed. The folding-type terminals have prevailed in the portable wireless terminal market recently, because they have the advantage of compact size.

One common style of contemporary folding-type portable telecommunications terminal has a main body rotatably connected to a folding body which carries a display device and a speaker. A port in the side of the main body may broadcast sounds when the terminal is in a closed orientation with the folding body lying across the main body.

Another popular style of contemporary folding-type portable telecommunications terminal also has a main body rotatably connected to a folding body. A main display device that is borne by the inside major surface of the folding body, is exposed to operational use when the folding body is in its opened position, while rotated away from the major surface of the main body. A separate, auxiliary display device is borne by the opposite side of the folding body, to display brief information, including the status of transmitted or received signals, the level of charge of the battery, and the current time, while the terminal is its closed orientation with the main display device lying against the major surface of the main body.

Following the recent diversification of telecommunication service regions in which portable wireless terminals are able to be used, the functions of the terminals have been improved to incorporate services such as a multimedia service. Most commonly, there has been a widespread efforts to market terminals with a camera lens mounted on the portable wireless terminals in order to equip users with a camera function. Service providers have also begun to provide video communication service using these portable wireless terminals.

With some styles of these popular telecommunication terminals however, it is somewhat inconvenient to use the terminals for video communication between the user and the speech correspondent of the user, because these terminals have a limited surface area upon which to mount the display device without adversely effecting their portability. Moreover, when a user sets the display device to display a small size image of the user in an effort to watch his appearance during a communication with a speech correspondent via the terminal, the video communication becomes even more awkward, and the image of the speech partner is covered by the displayed image of the user. Consequently, in such situations it is nearly impossible to take advantage of the video communication function properly with those telecommunication terminals that are currently on the market.

### SUMMARY OF THE INVENTION

Accordingly, the present invention has been made to solve the above-mentioned problems occurring in contemporary designs in the telecommunication terminal art.

It is an object of the present invention to provide an improved portable wireless terminal.

It is another object to provide a portable wireless terminal capable of providing improved video communication.

It is still another object to provide a portable wireless terminal capable of providing an easily used mode of video communication by properly utilizing display devices provided on the terminal, during video communications.

It is yet another object to provide a portable wireless terminal capable of comfortably accommodating oral telecommunications via the wireless terminal while simultaneously providing an easily used mode of video communication through utilizing display devices provided on the terminal.

These and other objects may be attained with a portable wireless terminal constructed with a first housing. A second housing which has a display device positioned on its surface facing the first housing, may be rotatably coupled to the first housing. A third housing which has an auxiliary display device positioned on one of its surfaces, may be rotatably coupled to an end of the second housing to enable the front and rear surfaces of the third housing may be reversed.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a perspective view showing a representative embodiment of a portable wireless terminal that is representative of one design that is contemporary in the art;

FIG. 2 is a perspective view showing another representative embodiment of a portable wireless terminal that is also contemporary in the art;

FIG. 3 is an exploded perspective view showing an embodiment of a portable wireless terminal having a rotatable display device constructed according to the principles of the present invention;

FIG. 4 is a constructional view showing second and third housings of the portable wireless terminal shown in FIG. 3; and

FIG. 5 is an exploded perspective view showing another embodiment of a portable wireless terminal having a rotatable display device constructed according to the principles of the present invention.

### DETAILED DESCRIPTION OF THE PREFERRED EMBODIMENT

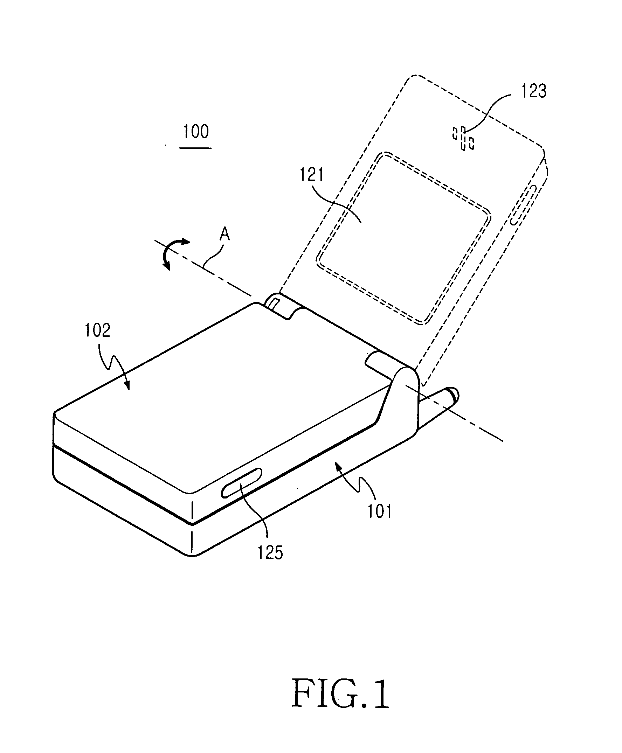

Turning now to the drawings, FIG. 1 is a perspective view showing a hypothetical embodiment of a portable wireless terminal 100 representative of the state of contemporary art. As shown in FIG. 1, the portable wireless terminal 100 may be constructed with a body 101 and a folding body 102 coupled to the body 101 in such a manner that body 102 may be rotated about a rotation axis A to be opened and closed. Folding body 102 has a display device 121 positioned thereon and a speaker device 123 positioned adjacently to a side of the display device 121. Folding body 101 may have a through-hole 125 formed on its lateral surface or on its upper portion (not shown) to output various signal sounds, e.g., a bell sound, while the folding body 102 is closed.

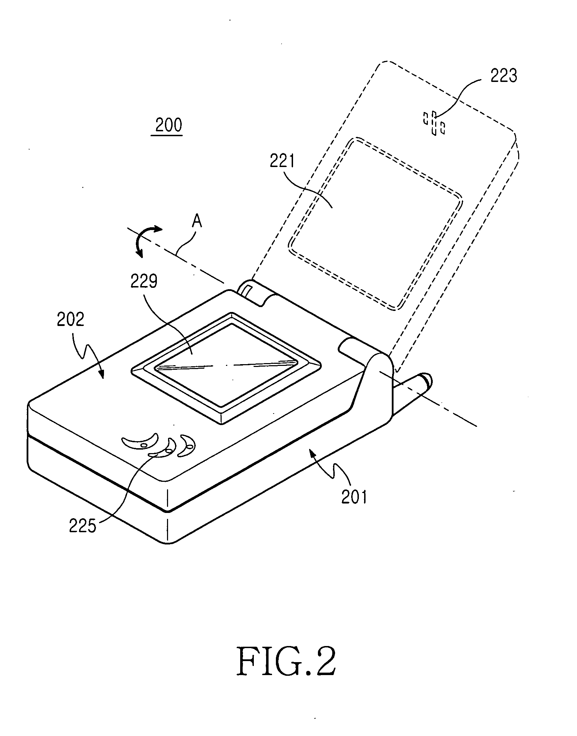

FIG. 2 is a perspective view showing another hypothetical embodiment of a portable wireless terminal 200 that is also representative of the state of contemporary art. As shown in FIG. 2, portable wireless terminal 200 may be constructed with a body 201 and a folding body 202 coupled to body 201 in such a manner that folding body 202 may be rotated about a rotation axis A to be opened and closed. Folding body 202 has a display device 221 positioned thereon and a speaker device 223 positioned adjacently to a side of display device 221. Folding body 201 has a speaker hole 225 formed on its external surface to output various signal sounds, e.g., a bell sound, from the speaker device while folding body 202 is closed. Folding body 202 may also have an auxiliary display device 229 formed on its external surface to display brief information, including the status of transmitted and received signals, the charge level of the battery, and current time, while folding body 202 is closed on body 201.

Referring to the terminals illustrated in Figs. 1 and 2 collectively, it should be noted that following the recent diversification of service regions in which portable wireless terminals are able to be used, their functions have been improved to incorporate services such as a multimedia service. Most of all, it has become widespread to mount a camera lens on the portable wireless terminals to provide a camera function. There also are commercial efforts that are able to provide a video communication service using portable wireless terminals.

It is somewhat inconvenient however, to use portable wireless terminals for video communication, because they have a limited area for the display device due to a need to maintain their small size, their compact arrangement and their portability. When a user sets the display device to display his own image in a miniature size portrait, in an attempt to watch the appearance of himself while conducting a conversation over the wireless terminal, the video communication becomes even more inconvenient and the image of the speech partner is covered by the displayed image of the user. Consequently, it is nearly impossible to properly take advantage of the video communication function.

Hereinafter, preferred embodiments of the present invention will be described with reference to the accompanying drawings. In the following description of the present invention, a detailed description of known functions and configurations incorporated herein will be omitted when it may make the subject matter of the present invention rather unclear.

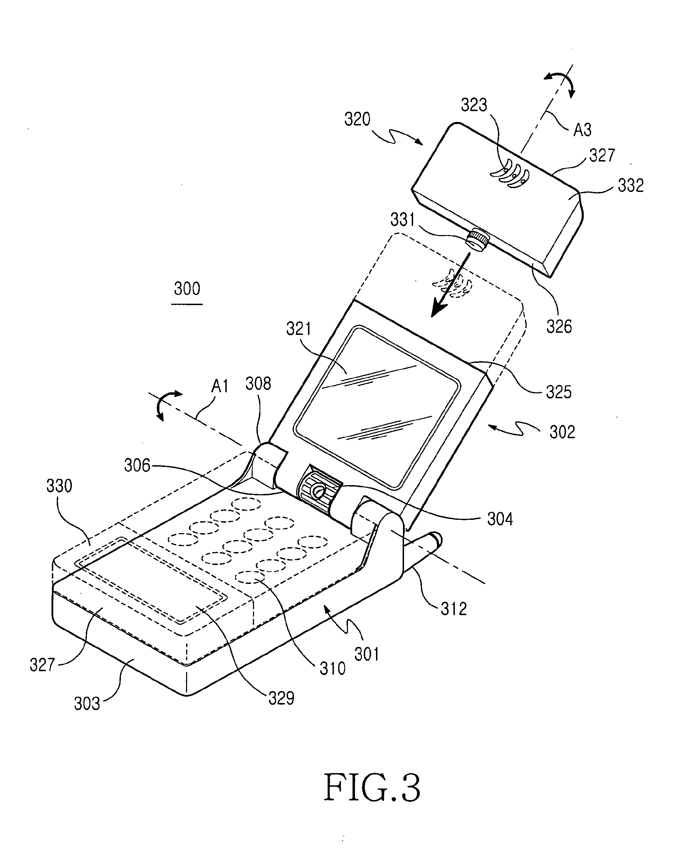

FIG. 3 is a partially exploded perspective view showing a portable wireless terminal 300 incorporating a rotatable display device 329 constructed as one embodiment of the principles of the present invention. As shown in FIG. 3, portable wireless terminal 300 may be equipped with rotatable display device 329. Terminal 300 may be constructed with first housing 301, with second housing 302 rotatably coupled to first housing 301, and third housing 320 rotatably coupled to second housing 302; first housing 301, second housing 302 and third housing 320 are operatively connected together to form terminal 300. Second housing 302 bears display device 321 which may be recessed flush into the inside surface of second housing 302, and third housing 320 is rotatably mountable on second surface 302 with an outer, upper edge 325 of second surface 302 nearly abutting against lower edge 326 of third housing 320. In typical use, outer edge 325 is positioned adjacently to lower edge 326. Third housing 320 may contain a speaker mounted inside, and one, or more speaker ports 323 may be formed in a reverse major surface 332 of third housing 330, while auxiliary display device 329 is mounted flush with the obverse major surface 330 of third housing 320. An antenna may be mounted to extend from first housing 301, and the major surface of first housing 301 may typically provide a telecommunication function such as a keypad 310 to operate the cell phone in response to the user's manipulation, while first housing 301 may encase such components as an antenna, audio amplifier, radio frequency amplifier, and one, or more, constituents of radio frequency circuits. Second housing 302 bears display device 321; and a camera lens 304 may be positioned on the lower end of the second housing 302 between the knuckles 306 of a hinge 308 that rotatably couples first housing 301 and second housing 302 together. Camera lens 304 may be adapted to be rotated about an axis of rotation A1 that extends through the centers of rotation of hinges 308 and knuckles 306 of the second housing 302.

Terminal 300 may be constructed so that when second housing 302 is rotated about axis A1 to a closed position, either obverse surface 330 or reverse surface 332 of third housing 320 lies flush against the otherwise exposed major surface of first housing 301, with upper edge 327 aligned flush with outer edge 303 of first housing 301. When second housing 302 is in this closed orientation, either speaker ports 323 or the screen of auxiliary display device 329 may be exposed to view.

Third housing 320 has a boss 331 formed on its lower end 326, which is rotatably coupled to a through-hole (not visible) formed in an upper, outer edge 325 of the second housing 302, so that third housing 320 may be rotated around an axis of rotation A2 relative to second housing 302. As such, third housing 320 can be rotated about an axis of rotation A2, which extends perpendicularly to axis of rotation A1 for the second housing 302. The third housing 320 may have one, or more, speaker ports 323 formed on its second, or reverse surface 332.

Third housing 320 has an auxiliary display device 329 formed on the obverse surface 330, with the viewable screen provided by display device 329 being somewhat smaller in area than that of the main display device 321. Auxiliary display device 329 enables a user to check brief information, for example, the status of the terminal 300, which is visually displayed on the screen of display device 329, while the second housing 302 is closed on the first housing 301. Even when second housing 302 is opened with second housing 302 rotated away from first housing 301, the auxiliary display device 329 can still provide the user with some information together with the display device 321, because the third housing 320 can be rotated around axis A3, to lie either in a common plane with the screen of display device 321, or alternatively to lie in another plane that obliquely intersects the plane of the screen of display device 321.

In one implementation of the present invention, if camera lens 304 is used for video communication, the image of the speech partner may be displayed on display device 321 and that of the user may be displayed on the screen of auxiliary device 329. As such, maximum use is made of limited display devices in order to enable convenient video communication between the user and the user's correspondent.

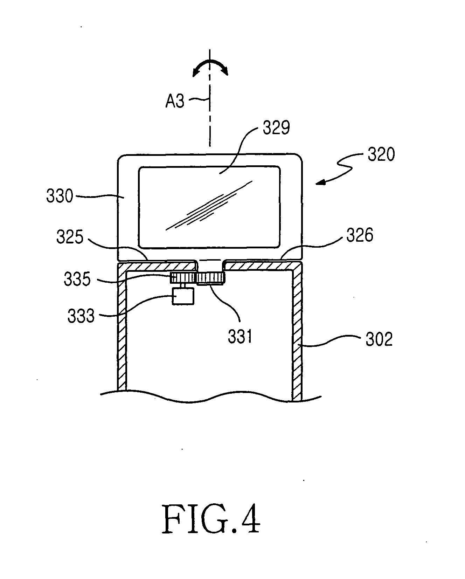

FIG. 4 is a constructional view showing the second and third housings 302 and 320 of the portable wireless terminal 300 shown in FIG. 3. As shown in FIG. 4, second housing 302 has a driving motor 333 and a gear module 335 mounted inside, to rotationally engage an external gear borne by the circumference of boss 331. This arrangement of gears is intended to provide automatic control of the rotation of the third housing 320 around axis A3 in accordance with the user's need, perhaps in response to manipulation of the keypad (not shown) of terminal 330 by the user. Alternatively, the user may rotate the third housing 320 manually without any additional driving motor 333.

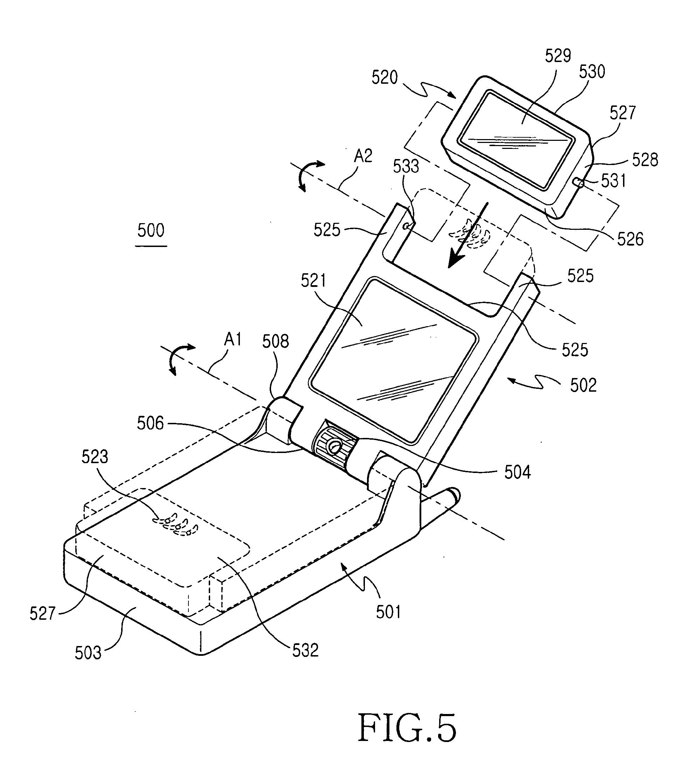

FIG. 5 is a partially exploded perspective view showing a portable wireless terminal 500 having a rotatable display device 529 constructed as another preferred embodiment of the principles of the present invention. As shown in FIG. 5, portable wireless terminal 500 bearing a rotatable display device 529 may be constructed with a first housing 501, a second housing 502 which is rotatably coupled to the first housing 501 by knuckles 506 interposed between hinges 508. Second housing 502 has a display device 521 positioned there on one of its major surfaces. A third housing 520 which is positioned adjacent to and spaced-apart from a side of display device 521, contains a speaker inside with one, or more, speaker ports 523 perforating a major, reverse surface 532. A camera lens 504 may be positioned between knuckles 506 on the lower end of the second housing 502. An antenna may be mounted to extend from first housing 501.

The third housing 520 has axially opposite upright pivot pins, or pintles, 531 protruding from opposite side walls 528 of third housing 520. Second housing 502 has a hinge arm 525 extending from each of its opposite sides of an ends, separated by an intervening upper edge 525. Each hinge arm 525 is perforated by a hinge hole 533 formed on the inner side of an end thereof, which corresponds to and rotatably received a corresponding one of pivot pins 531. Third housing 520 has an axis of rotation A2, which is spaced-apart from, but extends parallel to the axis of rotation A1 for the second housing 502. The third housing 520 is perforated by one, or more speaker ports 523 formed on the reverse major surface 532.

The third housing 520 has an auxiliary display device 529 formed on the obverse major surface 530, and the size of the viewable screen of display device 529 is smaller than that of the screen of display device 521. Auxiliary display device 529 enables a user to check brief information, such as the status of the terminal, while the second housing 502 is closed with its major surface lying flush against the major surface of the first housing 501. Even when the second housing 502 is opened and rotated about axis A1 away from the first housing 501, the auxiliary display device 529 may still provide the user with some information in combination with together with the screen of display device 521, because the third housing 520 can be rotated around axis A2 to lie in a common plane with the screen of display device 521, or alternatively, to lie in a plane that is somewhat oblique to the plane of display device 521.

Terminal 500 may be constructed so that when second housing 502 is rotated about axis A1 to a closed position, either obverse surface 530 or reverse surface 532 of third housing 520 lies flush against the otherwise exposed major surface of first housing 501, with either upper edge 527, or alternatively, lower edge 526, aligned flush with outer edge 503 of first housing 501. When second housing 502 is in this closed orientation, either speaker ports 523 may be exposed to view in the manner shown in phantom lines, or alternatively, the screen of auxiliary display device 529 may be exposed to view.

If camera lens 504 is used for video communication, the image of the speech partner may be displayed on the screen of display device 521 and that a real-time image of the user of terminal 500 may be displayed on the screen of auxiliary device 529. As such, maximum use may be made of limited display devices in order to provide the user, and the speech partner with both convenient video and oral communication simultaneously. According to the user's setting, auxiliary display device 529 of the third housing may display the image of the speech partner and display device 521 of the second housing may display the image of the user.

As mentioned above, the portable wireless terminals described in the foregoing paragraphs may have a main body encasing telecommunication circuit for the reception and transmission of audio and video information superimposed upon carrier signals, and these terminals have a rotatable display device; according to the principles of the present invention, these terminals have an auxiliary display device that may be positioned with an orientation toward one or the opposite exterior sides of the terminal, so that images can be displayed toward the user using the auxiliary display device, even when the second housing is opened.

In the exemplars of the wireless terminal described in the foregoing paragraphs, a proximal end of the second housing is rotatably coupled to a first housing that either encases constituent components of a telecommunication circuit or otherwise provides a telecommunication function such as a keypad which enables a user to manipulate various operational and functioned keys to control the wireless terminal, or an antenna 312. The third housing bearing the auxiliary display device is mounted on the distal end of the second housing, to accommodate rotation of the auxiliary display device around the axle joining the second and third housings, through an arc that is at least, if not more than, one hundred and eighty degrees, and preferable at least, if not more than three hundred and sixty degrees.

Each of the display devices described in the foregoing description are electronically driven to display and illuminate variable visual images, in conformance with the selections made by the user, and in compliance with the preferences indicated by the user as indicated by, for example, manipulation of a keypad, the images displayed by the main and auxiliary display devices may be either the same, or different. Accordingly, all of the display devices provided on the terminal can be utilized for convenient video communication. Furthermore, as the function of the terminal is variously extended in the future, any limit on the display devices provided on the terminal can be avoided.

While the invention has been shown and described with reference to certain preferred embodiments thereof, it will be understood by those skilled in the art that various changes in form and details may be made therein without departing from the spirit and scope of the invention as defined by the appended claims.

## Claims

1. A portable wireless terminal, comprising:
a first housing;
a second housing which has a display device positioned on its surface facing the first housing and which is rotatably coupled to the first housing; and
a third housing which has an auxiliary display device positioned on a surface thereof and which is rotatably coupled to an end of the second housing in such a manner that the front and rear surfaces thereof can be reversed.

2. A portable wireless terminal as claimed in claim 1, further comprising a speaker device contained in the third housing to output sound through the other surface of the third housing.

3. A portable wireless terminal as claimed in claim 1, wherein the terminal is adapted to provide a video communication function and the auxiliary display device is adapted to display the image of a user in the same direction as that of the display device during video communication.

4. A portable wireless terminal as claimed in claim 1, wherein the second housing has a hinge hole formed on its end surface; the third housing has a hinge protrusion on an end surface thereof, which corresponds to the hinge hole; and the third housing is adapted to be rotated about a rotation axis extending perpendicularly to a rotation axis of the second housing.

5. A portable wireless terminal as claimed in claim 1, wherein the second housing has a hinge arm extending from each of the opposite sides of an end thereof and a hinge hole formed on an end of the hinge arm; the third housing has a hinge protrusion formed each of its opposite surfaces, which corresponds to the hinge hole; and the third housing is adapted to be rotated about a rotation axis extending parallel to a rotation axis of the second housing.

6. A portable wireless terminal as claimed in claim 1, further comprising a driving motor which provides a driving force to rotate the third housing and reverse the front and rear surfaces thereof.

7. A portable wireless terminal, comprising:
a first housing;
a second housing bearing a first display device positioned to face the first housing, with a first end of said second housing being rotatably coupled to the first housing; and
a third housing bearing a second display device positioned on an obverse surface of the third housing, with the third housing being rotatably coupled to a second end of the second housing to accommodate rotation of the obverse surface relative to the first display.

8. A portable wireless terminal of claim 7, with the third housing coupled to said second housing to accommodate a reversal of planar alignment of the obverse surface and a reverse side of said third housing with the first display device.

9. A portable wireless terminal of claim 7, with said third housing coupled to said second housing to accommodate an oblique orientation of the second display with said first display device.

10. A portable wireless terminal of claim 7, further comprising a speaker device contained in the third housing to output sound through a reverse surface of the third housing.

11. A portable wireless terminal as claimed in claim 7, wherein the terminal is adapted to provide a video communication function and the second display device is adapted to display an image of a user in the same direction as the first display device during the video communication.

12. A portable wireless terminal as claimed in claim 7, further comprised of the second housing having a hinge hole formed on its end surface, and the third housing has a pivot pin protruding from on an edge rotatably received within the hinge hole.

13. A portable wireless terminal as claimed in claim 7, with the third housing adapted to be rotated about an axis of rotation extending perpendicularly to an axis of rotation axis between the first housing and the second housing.

14. A portable wireless terminal as claimed in claim 7, wherein the second housing has a hinge arm extending from each of the opposite sides of the second end with a hinge hole formed in each hinge arm, the third housing has a pivot pin protruding from each of opposite side walls rotatably received within a corresponding hinge hole, and the third housing is adapted to be rotated about a rotation axis extending parallel to a rotation axis of the second housing.

15. A portable wireless terminal as claimed in claim 7, further comprising a driving mechanism providing a driving force to rotate the third housing and reverse orientation of the obverse surface and reverse surface of the third housing.

16. A portable wireless terminal, comprising:
a first housing ;
a second housing rotatably connected to said first housing, bearing a first display device; and
a third housing bearing a second display device, connected to said second housing to enable orientation of a field-of-view of said second display to revolve around an axis traversing said second housing.

17. The portable wireless terminal of claim 16, comprising:
said second housing being rotatably connected to said first housing along a first axis; and
said third housing being rotatably connected to said second housing along a second axis substantially parallel to and spaced-apart from said first axis.

18. The portable wireless terminal of claim 16, comprising:
said second housing being rotatably connected to said first housing along a first axis; and
said third housing being rotatably connected to said second housing along a second axis substantially perpendicular to said first axis.

19. The portable wireless terminal of claim 16, comprising a driving mechanism providing a driving force rotating said second display device relative to said second housing.
